# EUROPÄISCHE PATENTSCHRIFT

(11) **EP 3 530 366 B1**
(45) Veröffentlichungstag und Bekanntmachung des Hinweises auf die Patenterteilung: **08.04.2026**
(21) Anmeldenummer: 19158168.5
(22) Anmeldetag: 20.02.2019
(51) Int. Cl.: B21C 51/00, B21D 22/02, B21D 22/20

(54) **METALLBAND FÜR DIE FERTIGUNG EINES BAUTEILS UND VERFAHREN ZUM FERTIGEN EINES BAUTEILS AUS EINEM METALLBAND**
METAL STRIP FOR THE PRODUCTION OF A COMPONENT AND METHOD FOR PRODUCING A COMPONENT FROM A METAL STRIP
BANDE MÉTALLIQUE POUR LA FABRICATION D'UN COMPOSANT ET PROCÉDÉ DE FABRICATION D'UN COMPOSANT À PARTIR D'UNE BANDE MÉTALLIQUE

(30) Priorität: 26.02.2018 DE 102018202856
(43) Veröffentlichungstag der Anmeldung: 28.08.2019
(73) Patentinhaber: AUDI AG, 85045 Ingolstadt (DE)
(72) Erfinder: RIX, Michael, 80807 München (DE)

(56) Entgegenhaltungen:
- EP-A1- 3 121 765
- JP-A- 2001 188 047
- JP-A- 2005 074 448
- US-A- 2 674 941

## Beschreibung

Die Erfindung betrifft ein Metallband für die Fertigung eines Bauteils, wobei das Metallband zu einer Rolle aufgewickelt und mit wenigstens einem Schmierstoff beaufschlagt ist. Des Weiteren betrifft die Erfindung ein Verfahren zum Fertigen eines Bauteils aus einem solchen Metallband.

Zu einer Rolle aufgewickelte Metallbänder, welche auch als Blechcoils bezeichnet werden, werden für die Fertigung von Bauteilen wie etwa Karosseriebauteilen eingesetzt. Bevor das Blech etwa mittels einer Presse zu dem Karosseriebauteil umgeformt wird, werden von dem Metallband zunächst umzuformende Abschnitte abgetrennt beziehungsweise aus dem Metallband herausgeschnitten, welche als Platinen bezeichnet werden. Hierfür wird üblicherweise eine sogenannte Bandschneideanlage eingesetzt. Das Metallband, dessen Oberfläche mit dem Schmierstoff etwa in Form eines Öls besprüht ist, wird also in die Bandschneideanlage eingelegt und mit einem Schneidwerkzeug geschnitten. Die fertig geschnittenen Bleche beziehungsweise Platinen werden gestapelt. Zum Umformen der Platinen wird dann der Stapel beispielsweise einer Presse zugeführt, mittels welcher Umformschritte und auch weitere Schneideschritte durchgeführt werden, um der Platine ihre gewünschte Form zu geben.

Es kann vorkommen, dass ein die Presse verlassendes Bauteil Fehler etwa in Form von Rissen oder Einfallstellen aufweist. Diesbezüglich ist es von Interesse, wenn das Bauteil dem Metallband zugeordnet werden kann, aus welchem die Platine herausgetrennt wurde. Es kann nämlich vorkommen, dass das Metallband von seiner Beschaffenheit her in einzelnen Bereichen nicht den gewünschten Spezifikationen entspricht. Dies kann durch eine nicht einheitliche Materialzusammensetzung des Metallbands oder geringfügige Variationen bei der Behandlung des Metallbands seitens des Herstellers des Metallbands bedingt sein. Es ist jedoch auch möglich, dass Bearbeitungsparameter bei dem Umformen zu dem Fehler in dem fertigen Bauteil geführt haben. Um hier verbessert Rückschlüsse ziehen zu können, ist eine möglichst detaillierte Bauteilrückverfolgung wünschenswert. Insbesondere ist die Zuordnung des Bauteils zu dem Metallband oder Blechcoil von Interesse, aus welchem das Bauteil gefertigt wurde.

Die JP 2005074448 A beschreibt die Herstellung eines Rohlings aus Stahl, welcher zu einer Rolle aufgewickelt wird. Auf den Rohling werden mittels einer Markiereinrichtung Markierungen aufgebracht, welche Produkteigenschaften des Rohlings angeben.

Die EP 3 121 765 A1 beschreibt ein Verfahren zur Identifikation eines Coils, bei welchem eine Bilddatei mit einer Abbildung eines an einer stirnseitigen Oberfläche des Coils ausgebildeten Wickelspiegels erzeugt wird. Die Bilddatei soll hierbei einer automatisierten Erkennung des Wickelspiegels durch Anwendung eines bildverarbeitenden Verfahrens zur Auswertung der Bilddatei dienen.

Zur Bauteilrückverfolgung existieren darüber hinaus Markierungstechnologien, welche eine Identifikation von Bauteilen ermöglichen. Beispielsweise kann ein Halbzeug, aus welchem das Bauteil gefertigt werden soll, mit einem Etikett versehen werden, oder es kann ein RFID-Transponder an dem Halbzeug befestigt werden. Jedoch liegen bei zu einer Rolle aufgewickelten Metallbändern beziehungsweise Blechcoils, bei welchen das Metallband mit einem Schmierstoff beaufschlagt ist, technische Randbedingungen vor, welche ein Aufbringen von solchen Identifikationsmitteln zum eindeutigen Identifizieren schwierig oder gar nicht erst möglich machen.

So erschweren glänzende und beölte Oberflächen etwa das Anbringen von Etiketten oder eine optische Identifikation anhand der Oberflächenbeschaffenheit. Zudem liegen bei der Verarbeitung des Metallbands sehr hohe Bandgeschwindigkeiten vor, etwa beim Abwickeln des Metallbands von der Rolle und auch nach einem Beschnitt beziehungsweise dem Zuschneiden der Platinen. Dies bringt es mit sich, dass beispielsweise zum Auslesen von auf Etiketten aufgedruckten Markierungen nur äußerst wenig Zeit zur Verfügung steht. Des Weiteren können sich Restriktionen aus nachfolgenden Bearbeitungsschritten wie etwa einem Lackieren oder einem Fügen der Bauteile ergeben.

Aufgabe der vorliegenden Erfindung ist es daher, ein Metallband der eingangs genannten Art zu schaffen, welches eine zuverlässige Bauteilrückverfolgung ermöglicht, und ein Verfahren zum Fertigen eines Bauteils aus einem solchen Metallband anzugeben.

Diese Aufgabe wird durch ein Metallband mit den Merkmalen des Patentanspruchs 1 und durch ein Verfahren mit den Merkmalen des Patentanspruchs 4 gelöst. Vorteilhafte Ausgestaltungen mit zweckmäßigen Weiterbildungen der Erfindung sind in den abhängigen Patentansprüchen angegeben.

Bei dem erfindungsgemäßen Metallband für die Fertigung eines Bauteils, bei welchem es sich insbesondere um ein Karosseriebauteil für ein Kraftfahrzeugs handeln kann, ist das Metallband zu einer Rolle aufgewickelt und mit wenigstens einem Schmierstoff beaufschlagt. Hierbei ist eine Oberfläche des Metallbands mit wenigstens einer zufälligen Markierung versehen, auf welche der wenigstens eine Schmierstoff aufgebracht ist. Die wenigstens eine Markierung ist also durch den Schmierstoff hindurch optisch erfassbar. Durch optisches Erfassen zumindest eines Teilbereichs der wenigstens einen Markierung ist ein zumindest den Teilbereich aufweisender erster Abschnitt des Metallbands von einem zweiten Abschnitt des Metallbands unterscheidbar, welcher einen weiteren Teilbereich der wenigstens einen Markierung aufweist. Es lässt sich also mittels einer Kamera durch optisches Erfassen zumindest des Teilbereichs der wenigstens einen Markierung ein jeweiliger Abschnitt des Metallbands eindeutig identifizieren.

Bei dem erfindungsgemäßen Metallband ist die Oberfläche des Metallbands durch Aufbringen einer Tinte mit der wenigstens einen in eine Längserstreckungsrichtung des Metallbands fortlaufenden Markierung versehen. Dadurch wird anders als bei einem Versehen der Oberfläche mit der Markierung durch Prägen, Gravieren oder Lasern keine Veränderung des Metallbands vorgenommen. Dies ist im Hinblick auf eine prozesssichere Fertigung des Bauteils aus dem Metallband vorteilhaft.

Die wenigstens eine Markierung ist hierbei jedoch nicht als ein Informationsträger wie etwa ein Barcode ausgebildet. Vielmehr handelt es sich bei der zufälligen Markierung um nach einem Zufallsprinzip angeordnete, bevorzugt auf die Oberfläche aufgebrachte Elemente, welche nicht als Informationsträger dienen, sondern lediglich die optische Identifizierbarkeit des jeweiligen Abschnitts ermöglichen. Dadurch, dass jeder Abschnitt des Metallbands von einem weiteren Abschnitt des Metallbands anhand des in dem jeweiligen Abschnitt vorgesehenen Teilbereichs der wenigstens einen Markierung identifiziert werden kann, ist eine zuverlässige Bauteilrückverfolgung von aus dem Metallband gefertigten Bauteilen möglich.

Es brauchen jedoch nicht nach einer Anlieferung des Metallbands zu einer das Metallband verarbeitenden Anlage, in welcher aus dem Metallband das Bauteil gefertigt wird, in aufwändiger Weise Markierungen auf das Metallband aufgebracht zu werden. Vielmehr wird auf die Markierung zurückgegriffen, welche bereits bei der Anlieferung des Metallbands auf diesem vorhanden ist. Bezogen auf die Fertigung des Bauteils aus dem Metallband in der das Metallband verarbeitenden Anlage handelt es sich somit bei der Markierung um ein inhärentes optisches Merkmal, also um ein Merkmal, welches dem Metallband bei seiner Anlieferung zu der Anlage bereits innewohnt beziehungsweise welches das Metallband bereits mitbringt.

Dem liegt die Erkenntnis zugrunde, dass nach der Anlieferung des Metallbands beziehungsweise des Blechcoils eine Beschriftung nur mit sehr hohem technischem Aufwand auf die Oberfläche des Metallbands aufgebracht werden könnte. Denn der sich auf dem Metallband befindende Schmierstoff erschwert beispielsweise das Aufbringen einer Tinte oder macht die Verwendung einer Tinte erforderlich, welche unter gesundheitlichen Aspekten nicht bedenkenlos eingesetzt werden kann, etwa weil eine derartige Tinte krebserregende Bestandteile enthält. Würde demgegenüber zunächst der Schmierstoff entfernt, dann das Metallband mit der Markierung versehen und anschließend wieder der Schmierstoff aufgebracht, so würde dies zu einem unvertretbar hohen Aufwand bei dem Bauteilhersteller führen, welcher in der Anlage aus dem Metallband das Bauteil fertigt. Ein solcher weiterer, labiler Prozess, welcher grundsätzlich eine Bauteilrückverfolgung ermöglichen würde, würde also aufgrund des für den Markierungsprozess zu betreibenden Aufwands die Vorteile der Bauteilrückverfolgung wieder zunichtemachen.

Demgegenüber ermöglicht das Versehen der Oberfläche des Metallbands mit der in die Längserstreckungsrichtung des Metallbands fortlaufenden, zufälligen Markierung eine eindeutige Identifikation des Metallbands beziehungsweise derartiger Halbzeuge, von aus dem Metallband gefertigten Zwischenprodukten und von fertigen Bauteilen, ohne dass eine zusätzliche Markierungstechnologie zum Einsatz zu kommen braucht. Diese Identifizierung ist auch unter den schwierigen Bedingungen der Fertigung der Bauteile aus dem Metallband und unter Vermeidung von zusätzlichen Prozessen und somit zusätzlichen Kosten möglich.

Die wenigstens eine Markierung kann durch auf die Oberfläche des Metallbands aufgebrachte, zufällig aneinandergereihte Zeichen gebildet sein. Insbesondere kann es sich bei solchen Zeichen um Schriftzeichen, bevorzugt um asiatische Schriftzeichen wie etwa chinesische Schriftzeichen handeln. Denn derartige Zeichen können aufgrund einer Vielzahl von Kanten mittels einer Erkennungseinrichtung, welche einen Algorithmus zur optischen Mustererkennung nutzt, insbesondere mittels einer Kamera, besonders einfach und sicher erfasst und somit zur Identifizierung des jeweiligen Abschnitts genutzt werden.

Zusätzlich oder alternativ kann die wenigstens eine Markierung durch ein zufälliges Muster gebildet sein, welches durch zufällig auf die Oberfläche aufgebrachte Elemente gebildet ist. Beispielsweise kann durch unregelmäßige Spritzer, Kleckse, eine unregelmäßige Farbspur oder dergleichen die Markierung in Form des zufälligen Musters gebildet sein. Dadurch ist eine besonders große Flexibilität bei der Art der Aufbringung der Markierung auf die Oberfläche des Metallbands gegeben. Zudem lassen sich auch derartige, zufällige Muster mittels eines optischen Mustererkennungsalgorithmus etwa einer Kamera oder einer mit der Kamera gekoppelten Auswerteeinrichtung besonders einfach erfassen und zur eindeutigen Identifizierung heranziehen.

Die Oberfläche des Metallbands kann zusätzlich zu der wenigstens einen Markierung mit einem fortlaufenden, maschinenlesbaren Code versehen sein, welcher das Metallband betreffende Parameter angibt. So können durch Auslesen des Codes das Metallband betreffende Parameter besonders einfach mit dem jeweils identifizierten Abschnitt des Metallbands verknüpft werden.

Das erfindungsgemäße Verfahren zum Fertigen eines Bauteils aus einem Metallband, welches zu einer Rolle aufgewickelt und mit wenigstens einem Schmierstoff beaufschlagt ist, wobei eine Oberfläche des Metallbands mit wenigstens einer zufälligen Markierung versehen ist, auf welche der wenigstens eine Schmierstoff aufgebracht ist, wobei durch optisches Erfassen zumindest eines Teilbereichs der wenigstens einen Markierung ein zumindest den Teilbereich aufweisender erster Abschnitt des Metallbands von einem zweiten Abschnitt des Metallbands unterscheidbar ist, welcher einen weiteren Teilbereich der wenigstens einen Markierung aufweist, und wobei es sich bei der zufälligen Markierung um nach einem Zufallsprinzip angeordnete Elemente handelt, welche nicht als Informationsträger dienen, sondern lediglich die optische Identifizierbarkeit des jeweiligen Abschnitts ermöglichen, umfasst die folgenden Schritte:
- Abrollen zumindest eines Teils des Metallbands;
- Ermitteln zumindest eines das Metallband betreffenden Parameters;
- Zuschneiden des abgerollten Teils des Metallbands zum Herstellen wenigstens eines Abschnitts des Metallbands;
- optisches Erfassen zumindest des Teilbereichs der wenigstens einen Markierung in dem wenigstens einen Abschnitt des Metallbands mittels einer ersten Kamera;
- Zuordnen des wenigstens einen Parameters zu dem wenigstens einen Abschnitt des Metallbands.

Indem der wenigstens eine Parameter dem wenigstens einen Abschnitt des Metallbands zugeordnet wird, ist eine zuverlässige Bauteilrückverfolgung ermöglicht. Beispielsweise können die dem jeweiligen Abschnitt zugeordneten Parameter als Datensatz abgespeichert werden, wobei diesem Datensatz ein mittels der ersten Kamera erfasstes Bild zugeordnet ist, welches zumindest den Teilbereich der Markierung enthält. Auf diese Weise kann der jeweilige Abschnitt eindeutig mit den das Metallband betreffenden Parametern verknüpft werden.

Vorzugsweise umfasst der zumindest eine, das Metallband betreffende Parameter eine das jeweilige Metallband eindeutig kennzeichnende Nummer, einen Hersteller des Metallbands und insbesondere eine fortlaufende Meterzahl des Metallbands. Denn dann können metergenau Eigenschaften des Metallbands dem jeweiligen Abschnitt zugeordnet werden. Auf diese Weise kann beispielsweise festgestellt werden, ob eine sich in einem Bereich des Metallbands ändernde Beschaffenheit desselben einen Einfluss auf das aus dem Metallband gefertigte Bauteil hatte. Entsprechende Angaben etwa über die jeweilige Beschaffenheit des Metallbands in jeweiligen Bereichen desselben oder über den jeweiligen Bereichen zuordenbare Fertigungsparameter können vom Hersteller des Metallbands bezogen werden.

Vorzugsweise wird der zumindest eine Parameter durch Auswerten von vor dem Zuschneiden mittels einer zweiten Kamera erfassten Bildern ermittelt. Beispielsweise kann das mittels der zweiten Kamera erfasste Bild mit einer Information verknüpft werden, welche Angaben etwa über die Beschaffenheit oder Fertigungsparameter in dem jeweiligen Meter des Metallbands umfasst, welcher auf dem Bild dargestellt ist. So ist eine metergenaue Referenzierung der identifizierten Abschnitte des Metallbands ermöglicht. Zudem ist eine genaue Ortsangabe möglich, an welcher Stelle der abgerollte Teil des Metallbands zugeschnitten werden soll, um den wenigstens einen Abschnitt des Metallbands herzustellen. Das Aufnehmen der Bilder kann beispielsweise mit einer Wegmesseinrichtung gekoppelt werden, sodass dem jeweiligen Abschnitt besonders genau das jeweilige, von der zweiten Kamera erfasste Bild zugeordnet werden kann.

Es kann jedoch auch dann, wenn die Oberfläche des Metallbands mit dem fortlaufenden, maschinenlesbaren Code versehen ist, durch Auslesen des Codes der wenigstens eine das Metallband betreffende Parameter ermittelt werden.

Vorzugsweise wird der wenigstens eine Abschnitt des Metallbands einer Umformeinrichtung zugeführt. Vor dem Umformen des wenigstens einen Abschnitts mittels der Umformeinrichtung wird der wenigstens eine Abschnitt durch erneutes optisches Erfassen zumindest des Teilbereichs der wenigstens einen Markierung identifiziert. So kann sichergestellt werden, dass genau bekannt ist, welcher Abschnitt in der Umformeinrichtung, welche insbesondere als Presse ausgebildet sein kann, einer Umformung unterzogen wird. Es spielt dann auch keine Rolle, in welcher Reihenfolge die nach dem Zuschneiden erhaltenen Abschnitte des Metallbands, welche beispielsweise gestapelt und in Stapeln gelagert werden können, der Umformeinrichtung zugeführt werden. Vielmehr können die Abschnitte in beliebiger Reihenfolge der Umformeinrichtung zugeführt werden. Dies macht das Verfahren besonders einfach und dennoch prozesssicher.

Vorzugsweise wird zum Identifizieren des wenigstens einen Abschnitts wenigstens ein Abstand des Teilbereichs der wenigstens einen Markierung von wenigstens einem Strukturelement des wenigstens einen Abschnitts berücksichtigt. Beispielsweise können Abstände zu Kanten, Ausnehmungen, Rändern und dergleichen markanten Strukturelementen des Abschnitts herangezogen werden, um den wenigstens einen Abschnitt besonders sicher zu identifizieren.

Vorzugsweise wird ein durch das Umformen des wenigstens einen Abschnitts erhaltenes Bauteil optisch erfasst und einer Weiterverarbeitung zugeführt. Hierbei wird vor einem Durchführen der Weiterverarbeitung das Bauteil durch erneutes optisches Erfassen zumindest des Teilbereichs der wenigstens einen Markierung identifiziert. Dem liegt die Erkenntnis zugrunde, dass die optische Identifizierung auch für umgeformte Bauteile vorteilhaft ist, wenn diese Bauteile der Weiterverarbeitung, etwa in Form eines Lackierens und/oder Fügens oder dergleichen zugeführt werden. Denn so kann bis zur endgültigen Fertigstellung eines aus den durch Umformen erhaltenen Bauteilen gebildeten Objekts, beispielsweise einer Karosserie eines Kraftfahrzeugs, eine lückenlose Rückverfolgung der Bauteile gewährleistet werden. Vorzugsweise wird zum Identifizieren des Bauteils wenigstens ein Abstand des Teilbereichs der wenigstens einen Markierung von wenigstens einem Strukturelement des Bauteils berücksichtigt. Beispielsweise können Abstände zu markanten Stufen, Kanten, Rändern, Ausnehmungen oder dergleichen Strukturelementen des Bauteils zum Identifizieren des Bauteils herangezogen werden. Dies macht die Identifizierung des Bauteils besonders sicher und zuverlässig.

Im Folgenden ist ein Ausführungsbeispiel der Erfindung beschrieben. Hierzu zeigt:
- Fig. 1: stark schematisiert ein Zuschneiden von Abschnitten beziehungsweise Platinen aus einem aufgerollten Metallband in einer Fertigungsanlage, wobei das Metallband abgerollt wird und mittels Kameras Aufnahmen von dem Metallband und von den Abschnitten des Metallbands gemacht werden;
- Fig. 2: die Identifizierung eines Abschnitts beziehungsweise einer Platine durch optische Mustererkennung; und
- Fig. 3: eine Wiedererkennung von aus den Platinen hergestellten Bauteilen anhand von optischen Merkmalen.

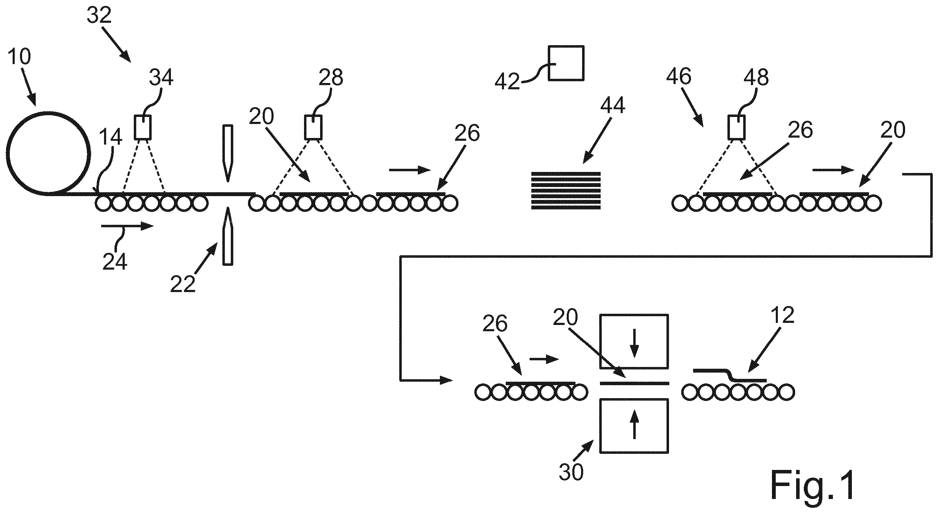

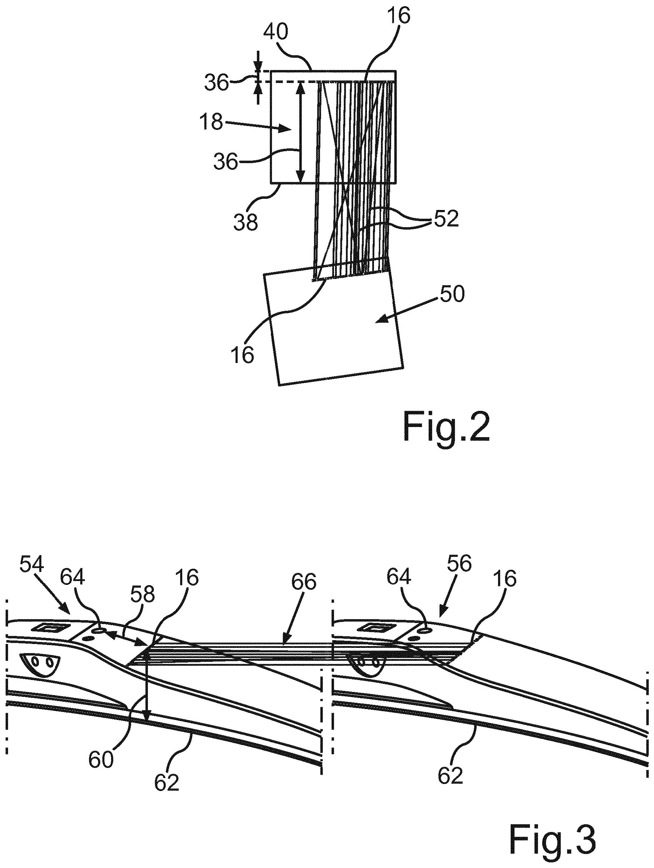

In Fig. 1 ist schematisch dargestellt, wie in einer Fertigungsanlage 32 aus einem Metallband 10, welches zu einer Rolle aufgewickelt ist und auch als Blechcoil bezeichnet wird, ein Bauteil 12 hergestellt wird. Bei dem Bauteil 12 kann es sich beispielsweise um ein Karosseriebauteil handeln. Das Metallband 10 wird von einem Hersteller bereitgestellt, wobei eine Oberfläche 14 des Metallbands mit einem Trockenschmierstoff oder Ölschmierstoff beaufschlagt wird. Vor diesem Aufbringen des Öls auf die Oberfläche 14 wird jedoch durch den Hersteller auf die Oberfläche 14 mittels einer Tinte eine Markierung 16 aufgebracht, welche in Fig. 2 zu sehen ist. Hierbei ist in Fig. 2 ein Bild 18 eines Abschnitts 20 des Metallbands 10 dargestellt ist, welcher auch als Platine bezeichnet wird. Derartige Abschnitte 20 beziehungsweise Platinen werden in der Fertigungsanlage 32 aus dem Metallband 10 hergestellt, indem das Metallband 10 abgerollt und einer Schneideanlage 22 zugeführt wird, welche in Fig. 1 schematisch gezeigt ist und vorliegend als Bandschneideanlage ausgebildet ist.

Der Inhalt des seitens des Herstellers beziehungsweise Lieferanten des Metallbands 10 auf die Oberfläche 14 des Metallbands 10 aufgebrachten Aufdrucks in Form der Tinte ist frei wählbar und kann über eine entsprechende Software parametriert werden. Beispielsweise kann ein Barcode auf die Oberfläche 14 aufgedruckt werden, welcher eine fortlaufende Meterzahl des Metallbands 10, eine eindeutige Nummer des Metallbands 10, den Hersteller sowie andere Informationen beinhalten kann.

Zusätzlich oder alternativ zu einem derartigen Barcode wird jedoch vorliegend seitens des Herstellers die Markierung 16 durch Aufdrucken der Tinte auf die Oberfläche 14 aufgebracht, wobei anschließend die Oberfläche 14 mit dem Schmierstoff beaufschlagt wird. Bei dieser Markierung 16 handelt es sich um eine zufällige Markierung, welche etwa durch Aufbringen einer in eine Längserstreckungsrichtung 24 fortlaufenden Tintenspur auf die Oberfläche 14 erzeugt ist. Die Längserstreckungsrichtung 24 des Metallbands 10 ist in Fig. 1 durch einen Pfeil veranschaulicht.

Durch das Aufbringen der zufälligen Markierung 16, welche beispielsweise durch auf die Oberfläche 14 des Metallbands 10 aufgebrachte, zufällig aneinandergereihte Zeichen wie etwa chinesische Schriftzeichen gebildet sein kann, lässt sich ein erster Abschnitt 20 des Metallbands 10 von einem weiteren Abschnitt 26 des Metallbands 10 unterscheiden. Hierfür werden mittels einer ersten Kamera 28 jeweilige Bilder der Abschnitte 20, 26 aufgenommen, welche einen Algorithmus zur optischen Mustererkennung nutzt.

Bezogen auf die Herstellung des Bauteils 12 in der in Fig. 1 schematisch gezeigten Fertigungsanlage 32 handelt es sich bei der Markierung 16 um ein dem Metallband 10 inhärentes, optisch erfassbares Merkmal. Denn das Metallband 10 weist die Markierung 16 bereits auf, bevor das Metallband 10 der Fertigungsanlage 32 zugeführt wird. Zum Identifizieren der Abschnitte 20, 26 wird also ein Fingerprint-Verfahren eingesetzt. Bei diesem Fingerprint-Verfahren wird jedoch nicht auf die mikroskopische Oberflächenstruktur der Oberfläche 14 des Metallbands 10 selber zurückgegriffen, sondern auf die Markierung 16 in Form der stabilen Tintenspur, welche von dem Hersteller des Metallbands 10 auf die Oberfläche 14 aufgebracht wurde. Es wird also mittels der ersten Kamera 28 ein Teilbereich der Markierung 16 optisch erfasst, und zwar insbesondere derjenige Teilbereich, welcher sich auf dem jeweiligen Abschnitt 20, 26 befindet. Dadurch kann der jeweilige Abschnitt 20, 26 eindeutig identifiziert werden, welcher in der Fertigungsanlage 32 einer Umformeinrichtung etwa in Form einer Presse 30 zugeführt wird.

Nach dem Beschnitt des Blechcoils beziehungsweise Metallbands 10 befindet sich der Rest oder Teilbereich der Markierung 16 beziehungsweise Tintenspur immer an einer anderen Stelle, nämlich auf dem jeweiligen Abschnitt 20, 26. Daher werden die durch die Markierung 16 bereitgestellten, optischen Merkmale mithilfe eines optischen Mustererkennungsalgorithmus als eindeutige Identifikatoren herangezogen. Dies soll mit Bezug auf das im Folgenden Ausgeführte veranschaulicht werden.

Ein jeweils abgerollter Teil des Metallbands 10 wird der Schneideanlage 22 zugeführt. Vor dem Beschnitt beziehungsweise Zuschneiden des abgerollten Teils des Metallbands 10 werden jedoch das Metallband 10 betreffende Parameter metergenau aufgenommen. Hierfür wird eine zweite, vorzugsweise hochauflösende Kamera 34 eingesetzt, welche Bilder von dem abgerollten Teil des Metallbands 10 aufnimmt. Die Meterzahl des Metallbands 10 oder Blechcoils wird hierbei deckungsgleich über eine Wegmesseinrichtung aufgenommen, sodass eine genaue Ortsangabe für den Beschnitt mittels der Schneideanlage 22 vorgenommen werden kann. Zudem können den mittels der zweiten Kamera 34 aufgenommenen Bildern das Metallband 10 betreffende Parameter wie etwa eine Nummer des Metallbands 10, ein Hersteller des Metallbands 10, eine über die Länge des Metallbands 10 bereichsweise inhomogene Beschaffenheit des Metallbands 10 und dergleichen dem jeweiligen Bild zugeordnet werden. Die zweite Kamera 34 ist in eine Förderrichtung des Metallbands 10 beziehungsweise der Abschnitte 20, 26 durch die Fertigungsanlage 32 gesehen vor der Schneideanlage 22 in die Fertigungsanlage 32 eingebaut.

Nach dem Beschnitt beziehungsweise Zuschneiden des Metallbands 10, also nach dem Herstellen der jeweiligen Abschnitte 20, 26 erfasst die erste Kamera 28 das Bild 18 (vergleiche Fig. 2) des jeweiligen Abschnitts 20, 26. Je nach Einbausituation kann die erste Kamera 28 als Flächenkamera ausgebildet sein oder als Zeilenkamera, welche nicht wie die Flächenkamera ein flächiges Bild aufnimmt, sondern einzelne Bildzeilen mit einer definierten Frequenz. Durch Zusammenfügen der Bildzeilen kann dann das Bild 18 zusammengesetzt werden.

Mittels der ersten Kamera 28 werden diejenigen Teilbereiche der Markierung 16 erfasst, welche sich auf dem jeweiligen Abschnitt 20, 26 des Metallbands 10 befinden. Dementsprechend werden die optischen Merkmale auf der Platine gesichert. Zum eindeutigen Zuordnen des jeweiligen Bilds 18 zu dem jeweiligen Abschnitt 20, 26 kann einerseits das optische Muster der Markierung 16 in Form der Tintenspur herangezogen werden. Bevorzugt werden aber auch Abstände 36 der Markierung 16 von jeweiligen Rändern 38, 40 des Abschnitts 20, 26 oder derartigen markanten Konturen bei der optischen Mustererkennung berücksichtigt.

Wenn die Platinen beziehungsweise Abschnitte 20, 26 vor einer Weiterverarbeitung gewendet werden, so kann eine identische Kameraanordnung, welche die nach dem Beschnitt angeordnete erste Kamera 28 und die vor dem Beschnitt angeordnete zweite Kamera 34 umfasst, so angebracht werden, dass mittels der Kameraanordnung Bilder einer unterseitigen Oberfläche des Metallbands 10 aufgenommen werden können.

Die das Metallband 10 betreffenden Parameter wie etwa die den Hersteller, die Nummer und den laufenden Meter des Blechcoils angebenden Daten werden bevorzugt zusammen mit dem mittels der ersten Kamera 28 erfassten Bildern 18 als Datensatz in einem Datenspeicher 42 der Fertigungsanlage 32 abgelegt, welcher in Fig. 1 schematisch gezeigt ist.

Gemäß Fig. 1 werden die Abschnitte 20, 26 gestapelt beziehungsweise in einem Stapel 44 angeordnet. Hierbei kann es vorkommen, dass die Reihenfolge der Abschnitte 20, 26 in dem Stapel 44 nicht der Reihenfolge entspricht, in welcher die Abschnitte 20, 26 die Schneideanlage 22 verlassen haben. Daher können dem jeweiligen Abschnitt 20, 26 nicht aufgrund einer definierten Objektreihenfolge die diesen Abschnitt 20, 26 betreffenden Parameter zugeordnet werden. Vielmehr werden an einer weiteren Station 46 der Fertigungsanlage 32 die von dem Stapel 44 heruntergenommenen einzelnen Abschnitte 20, 26 mittels einer weiteren Kamera 48 eingelesen. Es wird also durch erneutes optisches Erfassen der Markierung 16 auf dem jeweiligen Abschnitt 20, 26 der jeweilige Abschnitt 20, 26 identifiziert, welchem der in dem Datenspeicher 42 abgelegte Datensatz an den jeweiligen Abschnitt 20, 26 betreffenden Parametern zugeordnet ist. Dies soll mit Bezug auf Fig. 2 erläutert werden.

In Fig. 2 ist nämlich ein weiteres Bild 50 dargestellt, welches mittels der weiteren Kamera 48 aufgenommen wurde. Die auf der Platine beziehungsweise im jeweiligen Abschnitt 20, 26 vorhandenen Merkmale in Form der Markierung 16 sowie bevorzugt auch die Abstände 36 werden in einem Bildabgleich genutzt, um den jeweiligen Abschnitt 20, 26 eindeutig zu identifizieren. In Fig. 2 dargestellte Linien 52 verbinden diejenigen Merkmale miteinander, welche in beiden Bildern 18, 50 von einer Auswerteeinrichtung der Fertigungsanlage 32 als einander gleich identifiziert wurden. Gerade Linien 52 bedeuten hierbei eine korrekte Zuordnung. Die sehr geringe Anzahl an sich kreuzenden Linien 52 veranschaulicht, dass die Merkmale überwiegend korrekt zugeordnet wurden. Der für den Bildabgleich verwendete Algorithmus zur Mustererkennung ermöglicht also die Identifizierung des jeweiligen Abschnitts 20, 26 beziehungsweise der jeweiligen Platine, bevor die Platine der Umformeinrichtung in Form der Presse 30 zugeführt wird. Bevorzugt können dem in dem Datenspeicher 42 abgelegten Datensatz weitere Datensätze hinzugefügt werden, etwa Zeitdaten, die Schneideanlage 22 betreffende Daten und dergleichen. Wenn jeder Platine beziehungsweise jedem Abschnitt 20, 26 auf diese Art und Weise mehrere Datensätze zugeordnet sind, so können diese Datensätze in einem gemeinsamen Datensatz zusammengefasst werden, um die Anzahl der handzuhabenden Datensätze zu reduzieren.

Nach dem Identifizieren des jeweiligen Abschnitts 20, 26 wird, wie vorliegend beispielhaft gezeigt, mittels der Presse 30 der Abschnitt 20, 26 beziehungsweise die Platine umgeformt und so das umgeformte Bauteil 12 erhalten.

Mit Bezug auf Fig. 3 soll veranschaulicht werden, dass die Markierung 16 auch an dem umgeformten Bauteil 12 dazu verwendet werden kann, nach dem Pressen und vor einer Weiterverarbeitung die Bauteile 12 zu identifizieren. Beispielsweise ist in Fig. 3 ein erstes Bild 54 des umgeformten Bauteils 12 gezeigt, welches beim Verlassen der Presse 30 mittels einer (nicht gezeigten) weiteren Kamera aufgenommen wurde. Durch das Umformen kann die Markierung 16 gegebenenfalls verändert sein. Jedoch wird beispielsweise im Karosseriebau das sich auf dem umgeformten Bauteil 12 befindende Öl erst kurz vor dem Lackieren entfernt, wobei auch die Tinte entfernt wird, durch welche die Markierung 16 gebildet ist. Somit kann vor diesem Entfernen der Markierung 16 durch den Vergleich des Bilds 54 mit einem weiteren Bild 56 das Bauteil 12 eindeutig identifiziert werden. Das weitere Bild 56 wird hierfür aufgenommen, bevor das Bauteil 12 entfettet, die Markierung 16 also zusammen mit dem Schmierstoff oder Öl von dem Bauteil 12 entfernt wird. Der Bildvergleich wird insbesondere von der Auswerteeinrichtung der Fertigungsanlage 32 durchgeführt, welche Zugriff auf die von den Kameras 28, 34, 48 erfassten Bilder oder Bilddaten und auf die in dem Datenspeicher 42 abgelegten Parameter hat.

Bei der Identifizierung des umgeformten Bauteils 12, welches der Weiterverarbeitung zugeführt wird, wird bevorzugt zur Identifizierung des Bauteils 12 anhand eines Bildabgleich des ersten Bilds 54 mit dem weiteren Bild 56 nicht nur die Markierung 16 herangezogen, sondern auch Abstände 58, 60 der Markierung 16 von optisch markanten Strukturelementen des Bauteils 12 berücksichtigt, etwa Abstände 58, 60 der Markierung 16 von einer Kante 62 des Bauteils 12 und/oder von Öffnungen 64, welche in dem Bauteil 12 in der Presse 30 und/oder mittels der Schneideanlage 22 ausgebildet wurden.

Auch in Fig. 3 veranschaulichen Linien 66 dass in den beiden Bildern 54, 56 dieselben Merkmale erkannt wurden. Auch hier macht man sich bei der Wiedererkennung der Bauteile 12 beziehungsweise Fertigteile optische Merkmale unter Nutzung der bestehenden Markierung 16 zunutze. Zu dem Datensatz, welcher dem jeweiligen Abschnitt 20, 26 zugeordnet und in dem Datenspeicher 42 abgelegt ist, können weitere Daten hinzugefügt werden, welche das Umformen des Abschnitts 20, 26 betreffen, also etwa die Presse 30 betreffende Daten, Zeitdaten und dergleichen. Dies ist einer vollständigen Rückverfolgung des Bauteils 12 innerhalb der Fertigungsanlage 32 unter Berücksichtigung von derartigen Weiterverarbeitungsparametern zuträglich.

Durch die vorliegend genutzte optische Mustererkennung der Tintenspur beziehungsweise der Markierung 16 auf den Abschnitten 20, 26 beziehungsweise dem Bauteil 12 kann auf eine anderweitige Aktuatorik innerhalb der Prozesskette der Verarbeitung des Blechcoils verzichtet werden, und dennoch können die Abschnitte 20, 26 beziehungsweise Bauteile 12 eindeutig identifiziert werden. Das Prinzip der vorstehend beschriebenen optischen Mustererkennung kann auch in anderen Fertigungsverfahren verwendet werden, bei welchen eine zufällige beziehungsweise randomisierte optisch erfassbare Markierung 16 aufgebracht wird und die Eindeutigkeit über die randomisierten optischen Merkmale gegeben ist.

Insgesamt zeigt das Beispiel, wie durch die Erfindung eine Bauteilrückverfolgung in der Prozesskette Blech anhand von optisch inhärenten Merkmalen ermöglicht ist.

## Patentansprüche

1. Metallband für die Fertigung eines Bauteils (12), insbesondere eines Karosseriebauteils eines Kraftfahrzeugs, wobei das Metallband (10) zu einer Rolle aufgewickelt und mit wenigstens einem Schmierstoff beaufschlagt ist,
**dadurch gekennzeichnet, dass**
eine Oberfläche (14) des Metallbands (10) mit wenigstens einer zufälligen Markierung (16) versehen ist, auf welche der wenigstens eine Schmierstoff aufgebracht ist, wobei durch optisches Erfassen zumindest eines Teilbereichs der wenigstens einen Markierung (16) ein zumindest den Teilbereich aufweisender erster Abschnitt (20) des Metallbands (10) von einem zweiten Abschnitt (26) des Metallbands (10) unterscheidbar ist, welcher einen weiteren Teilbereich der wenigstens einen Markierung (16) aufweist, wobei die Oberfläche (14) des Metallbands (10) durch Aufbringen einer Tinte mit der wenigstens einen in eine Längserstreckungsrichtung (24) des Metallbands (10) fortlaufenden Markierung (16) versehen ist, sodass jeder Abschnitt (20, 26) des Metallbands (10) anhand des in dem jeweiligen Abschnitt (20, 26) vorgesehenen Teilbereichs der wenigstens einen Markierung (16) identifizierbar ist, und wobei es sich bei der zufälligen Markierung (16) um nach einem Zufallsprinzip angeordnete Elemente handelt, welche nicht als Informationsträger dienen, sondern lediglich die optische Identifizierbarkeit des jeweiligen Abschnitts (20, 26) ermöglichen.

2. Metallband nach Anspruch 1,
**dadurch gekennzeichnet, dass**
die wenigstens eine Markierung (16) durch auf die Oberfläche (14) des Metallbands (10) aufgebrachte, zufällig aneinandergereihte Zeichen, insbesondere Schriftzeichen, und/oder ein zufälliges Muster gebildet ist.

3. Metallband nach einem der vorhergehenden Ansprüche,
**dadurch gekennzeichnet, dass**
die Oberfläche (14) des Metallbands (10) zusätzlich zu der wenigstens einen Markierung (16) mit einem fortlaufenden, maschinenlesbaren Code versehen ist, welcher das Metallband (10) betreffende Parameter angibt.

4. Verfahren zum Fertigen eines Bauteils (12) aus einem Metallband (10), wobei das Metallband (10) zu einer Rolle aufgewickelt und mit wenigstens einem Schmierstoff beaufschlagt ist, wobei eine Oberfläche (14) des Metallbands (10) mit wenigstens einer zufälligen Markierung (16) versehen ist, auf welche der wenigstens eine Schmierstoff aufgebracht ist, wobei durch optisches Erfassen zumindest eines Teilbereichs der wenigstens einen Markierung (16) ein zumindest den Teilbereich aufweisender erster Abschnitt (20) des Metallbands (10) von einem zweiten Abschnitt (26) des Metallbands (10) unterscheidbar ist, welcher einen weiteren Teilbereich der wenigstens einen Markierung (16) aufweist, und wobei es sich bei der zufälligen Markierung (16) um nach einem Zufallsprinzip angeordnete Elemente handelt, welche nicht als Informationsträger dienen, sondern lediglich die optische Identifizierbarkeit des jeweiligen Abschnitts (20, 26) ermöglichen, wobei das Verfahren die folgenden Schritte umfasst:
- Abrollen zumindest eines Teils des Metallbands (10);
- Ermitteln zumindest eines das Metallband (10) betreffenden Parameters;
- Zuschneiden des abgerollten Teils des Metallbands (10) zum Herstellen wenigstens eines Abschnitts (20, 26) des Metallbands (10);
- Optisches Erfassen zumindest des Teilbereichs der wenigstens einen Markierung (16) in dem wenigstens einen Abschnitt (20, 26) des Metallbands (10) mittels einer ersten Kamera (28);
- Zuordnen des wenigstens einen Parameters zu dem wenigstens einen Abschnitt (20, 26) des Metallbands (10).

5. Verfahren nach Anspruch 4,
**dadurch gekennzeichnet, dass**
das zum Fertigen des Bauteils (12) verwendete Metallband (10) nach einem der Ansprüche 1 bis 3 ausgebildet wird.

6. Verfahren nach Anspruch 4 oder 5,
**dadurch gekennzeichnet, dass**
durch Auswerten von vor dem Zuschneiden mittels einer zweiten Kamera (34) erfassten Bildern der zumindest eine Parameter ermittelt wird.

7. Verfahren nach einem der Ansprüche 4 bis 6,
**dadurch gekennzeichnet, dass**
der wenigstens eine Abschnitt (20, 26) des Metallbands (10) einer Umformeinrichtung (30) zugeführt wird, wobei vor dem Umformen der wenigstens eine Abschnitt (20, 26) durch erneutes optisches Erfassen zumindest des Teilbereichs der wenigstens einen Markierung (16) identifiziert wird.

8. Verfahren nach Anspruch 7,
**dadurch gekennzeichnet, dass**
zum Identifizieren des wenigstens einen Abschnitts (20, 26) wenigstens ein Abstand (36) des Teilbereichs der wenigstens einen Markierung (16) von wenigstens einem Strukturelement (38, 40) des wenigstens einen Abschnitts (20, 26) berücksichtigt wird.

9. Verfahren nach Anspruch 7 oder 8,
**dadurch gekennzeichnet, dass**
ein durch das Umformen des wenigstens einen Abschnitts (20, 26) erhaltenes Bauteil (12) optisch erfasst wird und einer Weiterverarbeitung zugeführt wird, wobei vor einem Durchführen der Weiterverarbeitung das Bauteil (12) durch erneutes optisches Erfassen zumindest des Teilbereichs der wenigstens einen Markierung (16) identifiziert wird.

10. Verfahren nach Anspruch 9,
**dadurch gekennzeichnet, dass**
zum Identifizieren des Bauteils (12) wenigstens ein Abstand (60, 62) des Teilbereichs der wenigstens einen Markierung (16) von wenigstens einem Strukturelement (62, 64) des Bauteils (12) berücksichtigt wird.

## Claims

1. Metal strip for producing a component (12), in particular a body component of a motor vehicle, wherein the metal strip (10) is wound into a roll and is acted on with at least one lubricant,
**characterized in that**
a surface (14) of the metal strip (10) is provided with at least one random marking (16) to which the at least one lubricant is applied, wherein as a result of optical detection of at least one part-region of the at least one marking (16) a first portion (20), which has at least the part-region, of the metal strip (10) can be distinguished from a second portion (26) of the metal strip (10) which has an additional part-region of the at least one marking (16), wherein the surface (14) of the metal strip (10) is provided by applying an ink with the at least one marking (16) which continues in a longitudinal extent direction (24) of the metal strip (10) so that each portion (20, 26) of the metal strip (10) can be identified with reference to the part-region, which is provided in the respective portion (20, 26), of the at least one marking (16), and wherein the random marking (16) involves elements which are arranged in accordance with a random principle and which do not act as information carriers, but instead only enable the respective portion (20, 26) to be optically identified.

2. Metal strip according to claim 1,
**characterized in that**
the at least one marking (16) is formed by means of symbols which are applied to the surface (14) of the metal strip (10) and which are arranged randomly one after the other, in particular characters, and/or a random pattern.

3. Metal strip according to either of the preceding claims,
**characterized in that**
the surface (14) of the metal strip (10) in addition to the at least one marking (16) is provided with a continuous, machine-readable code which indicates parameters relating to the metal strip (10).

4. Method for producing a component (12) from a metal strip (10), wherein the metal strip (10) is wound into a roll and acted on with at least one lubricant, wherein a surface (14) of the metal strip is provided with at least one random marking (16) to which the at least one lubricant is applied, wherein as a result of optical detection of at least one part-region of the at least one marking (16) a first portion (20), which has at least the part-region, of the metal strip (10) can be distinguished from a second portion (26) of the metal strip (10) which has an additional part-region of the at least one marking (16), and wherein the random marking (16) involves elements which are arranged in accordance with a random principle and which do not act as information carriers, but instead only enable the respective portion (20, 26) to be optically identified, wherein the method comprises the following steps:
- unrolling at least a portion of the metal strip (10);
- establishing at least one parameter relating to the metal strip (10);
- cutting the unrolled portion of the metal strip (10) in order to produce at least one portion (20, 26) of the metal strip (10);
- optically detecting at least the part-region of the at least one marking (16) in the at least one portion (20, 26) of the metal strip (10) by means of a first camera (28);
- associating the at least one parameter with the at least one portion (20, 26) of the metal strip (10).

5. Method according to claim 4,
**characterized in that**
the metal strip (10) used to produce the component (12) is constructed according to any one of claims 1 to 3.

6. Method according to claim 4 or 5,
**characterized in that**
by evaluating images detected by means of a second camera (34) prior to the cutting the at least one parameter is established.

7. Method according to any one of claims 4 to 6,
**characterized in that**
the at least one portion (20, 26) of the metal strip (10) is supplied to a shaping device (30), wherein prior to the shaping of the at least one portion (20, 26) is identified by means of repeated optical detection of at least the part-region of the at least one marking (16).

8. Method according to claim 7,
**characterized in that**
in order to identify the at least one portion (20, 26) at least one spacing (36) of the part-region of the at least one marking (16) from at least one structural element (38, 40) of the at least one portion (20, 26) is taken into account.

9. Method according to claim 7 or 8,
**characterized in that**
a component (12) which is obtained by the shaping of the at least one portion (20, 26) is optically detected and supplied for further processing, wherein before carrying out the further processing the component (12) is identified by repeated detection of at least the part-region of the at least one marking (16).

10. Method according to claim 9,
**characterized in that**
in order to identify the component (12) at least one spacing (60, 62) of the part-region of the at least one marking (16) from at least one structural element (62, 64) of the component (12) is taken into account.

## Revendications

1. Bande métallique pour la fabrication d'un composant (12), en particulier d'un composant de carrosserie d'un véhicule automobile, dans laquelle la bande métallique (10) est enroulée en un rouleau et est alimentée par au moins un lubrifiant,
**caractérisée en ce que**
une surface (14) de la bande métallique (10) est pourvue d'au moins un marquage aléatoire (16) sur lequel le au moins un lubrifiant est appliqué, dans laquelle une première section (20) de la bande métallique (10) présentant au moins la zone partielle peut être distinguée d'une seconde section (26) de la bande métallique (10) par la détection optique au moins d'une zone partielle de l'au moins un marquage (16), section qui présente une autre zone partielle de l'au moins un marquage (16), dans laquelle la surface (14) de la bande métallique (10) est pourvue par application d'une encre de l'au moins un marquage continu dans une direction d'extension longitudinale (24) de la bande métallique (10), de sorte que chaque section (20, 26) de la bande métallique (10) puisse être identifiée à l'aide de la zone partielle de l'au moins un marquage (16) prévue dans la section respective (20, 26), et dans laquelle le marquage aléatoire (16) concerne des éléments agencés selon un principe aléatoire qui ne servent pas de support d'information mais permettent juste l'identifiabilité optique de la section respective (20, 26).

2. Bande métallique selon la revendication 1,
**caractérisée en ce que**
le au moins un marquage (16) est formé par des signes appliqués sur la surface (14) de la bande métallique (10), juxtaposés de manière aléatoire, en particulier des caractères et/ou un motif aléatoire.

3. Bande métallique selon l'une quelconque des revendications précédentes,
**caractérisée en ce que**
la surface (14) de la bande métallique (10) est pourvue, outre le au moins un marquage (16), d'un code continu lisible par machine qui indique des paramètres concernant la bande métallique (10).

4. Procédé de fabrication d'un composant (12) à partir d'une bande métallique (10), dans lequel la bande métallique (10) est enroulée en un rouleau et est alimentée par au moins un lubrifiant, dans lequel une surface (14) de la bande métallique (10) est pourvue d'au moins un marquage aléatoire (16) sur lequel le au moins un lubrifiant est appliqué, dans laquelle une première section (20) de la bande métallique (10) présentant au moins la zone partielle peut être distinguée d'une seconde section (26) de la bande métallique (10) par la détection optique au moins d'une zone partielle de l'au moins un marquage (16), section qui présente une autre zone partielle de l'au moins un marquage (16), et dans lequel le marquage aléatoire (16) concerne des éléments agencés selon un principe aléatoire qui ne servent pas de support d'information mais permettent juste l'identifiabilité optique de la section respective (20, 26), dans lequel le procédé comprend les étapes suivantes :
- le déroulement au moins d'une partie de la bande métallique (10) ;
- la détermination d'au moins un paramètre concernant la bande métallique (10) ;
- la découpe de la partie déroulée de la bande métallique (10) pour la fabrication au moins d'une section (20, 26) de la bande métallique (10) ;
- la détection optique d'au moins la zone partielle de l'au moins un marquage (16) dans l'au moins une section (20, 26) de la bande métallique (10) au moyen d'une première caméra (28) ;
- l'association de l'au moins un paramètre à la au moins une section (20, 26) de la bande métallique (10).

5. Procédé selon la revendication 4,
**caractérisé en ce que**
la bande métallique (10) utilisée pour la fabrication du composant (12) est configurée selon l'une quelconque des revendications 1 à 3.

6. Procédé selon la revendication 4 ou 5,
**caractérisé en ce que**
le au moins un paramètre est déterminé par l'évaluation d'images prises avant la découpe au moyen d'une seconde caméra.

7. Procédé selon l'une quelconque des revendications 4 à 6,
**caractérisé en ce que**
la au moins une section (20, 26) de la bande métallique (10) est fournie à un dispositif de formage (30), dans lequel la au moins une section (20, 26) est identifiée avant le formage par une nouvelle détection optique d'au moins la zone partielle de l'au moins un marquage (16).

8. Procédé selon la revendication 7,
**caractérisé en ce que**
au moins une distance (36) entre la zone partielle de l'au moins un marquage (16) et au moins un élément structurel (38, 40) de la au moins une section (20, 26) est prise en considération pour l'identification de la au moins une section (20, 26).

9. Procédé selon la revendication 7 ou 8,
**caractérisé en ce que**
un composant (12) obtenu par le formage de la au moins une section (20, 26) est détecté optiquement et est transféré pour un traitement ultérieur, dans lequel le composant (12) est identifié par une nouvelle détection optique d'au moins la zone partielle de l'au moins un marquage (16) avant une réalisation du traitement ultérieur.

10. Procédé selon la revendication 9,
**caractérisé en ce que**
au moins une distance (60, 62) entre la zone partielle de l'au moins un marquage (16) et au moins un élément structurel (62, 64) du composant (12) est prise en considération pour l'identification du composant (12).
